# EUROPÄISCHE PATENTSCHRIFT

(11) **EP 2 416 042 B1**
(45) Veröffentlichungstag und Bekanntmachung des Hinweises auf die Patenterteilung: **01.01.2014**
(21) Anmeldenummer: 10174739.2
(22) Anmeldetag: 31.08.2010
(51) Int. Cl.: F16L 3/12, H02G 3/32, F16L 3/11, F16L 55/035, F16L 3/20, H02G 3/00

(54) **Justierbare Aufhängevorrichtung**
Adjustable hanging device
Dispositif de suspension réglable

(30) Priorität: 03.08.2010 EP 10171806
(43) Veröffentlichungstag der Anmeldung: 08.02.2012
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- WO-A1-99/29981
- DE-A1- 19 506 661
- DE-A1- 19 734 629

## Beschreibung

Die Erfindung betrifft eine justierbare Aufhängevorrichtung nach dem Oberbegriff des Patentanspruchs 1.

Bei der Erstellung von Bauten ist stets die Installation von Trägermaterial erforderlich, mittels dessen Leitungen und Rohre gehalten werden. Vorrichtungen zur Befestigung und Führung von Kabel sind beispielsweise in [1], Produktkatalog der LANZ OENSINGEN AG, Juni 2009 beschrieben. Insbesondere sind in [1] verschiedenartige Kabelbahnen, Gitterbahnen und Kabelkanäle sowie entsprechendes Montagematerial, wie Deckenstützen und Ausleger, beschrieben. Weiterhin sind Rohrschellen beschrieben, mittels denen beispielsweise Wasserleitungen gehalten werden.

Bei all diesen Montagevorrichtungen ist es oft wünschenswert, dass der Abstand eines gehaltenen Gegenstandes von einem Körper bzw. Fläche, wie einer Wand oder einer Decke, präzise eingestellt werden kann. Einerseits wird dadurch ein vorteilhafter ästhetischer Eindruck des installierten Gegenstandes erzielt. Andererseits wird vermieden, dass unkontrollierte Kräfte auf den installierten Gegenstand einwirken, diesen verbiegen und gegebenenfalls Beschädigungen verursachen. Sofern ein Gegenstand von mehreren Aufhängevorrichtungen gehalten wird, so ist es zudem wünschenswert, dass die Last des Gegenstandes gleichmässig auf diese aufgeteilt wird.

Bei der Installation einer Rohrleitung mittels Rohrschellen soll diese üblicherweise in einem Abstand von der Decke installiert werden, der vom Installateur fallweise festgelegt wird. Bei der Installation einer abgehängten Decke soll diese planeben ausgerichtet werden und von allen Aufhängevorrichtungen in der vorgesehenen Höhe gehalten werden.

Die zu diesem Zweck vorgesehenen justierbaren Aufhängevorrichtungen sind üblicherweise aufwändig gestaltet und erfordern zumeist viel Raum. Weiterhin ist deren Handhabung oft nicht leicht möglich. Ferner weisen bekannte Aufhängevorrichtungen oft eine nur geringe Belastbarkeit auf.

Aus [2], WO9929981A1, ist eine justierbare Aufhängevorrichtung für Profilträger bekannt, die aufwändig ausgestaltet ist.

Aus [3], DE19734629A1, ist eine justierbare Aufhängevorrichtung für eine Rohrschelle bekannt, welche einen mit einem Gewinde versehenen Abstandsstab aufweist, der von einem an der Decke montierten Ausgleichskörper gehalten ist. Der Ausgleichskörper besteht aus einem nach unten offenen U-Profil mit zwei Schenkeln, an deren Ende eine Gewindeplatte gehalten ist. Die Gewindeplatte weist eine Gewindebohrung auf, in der der Abstandsstab drehbar gehalten ist. Durch Drehen des Abstandsstabs kann dieser zwischen die Schenkel des U-Profils eingedreht und in der Höhe justiert werden. Diese Lösung, die einen zweiteiligen Ausgleichskörper erfordert, ist relativ aufwändig gestaltet und nur dann belastbar, wenn die Gewindeplatte stabil in den Schenkeln des U-Profils verankert ist.

Aus [4], KR20020004304A, ist eine Aufhängevorrichtung mit einem Abstandsstab bekannt, welcher in einen Ausgleichskörper eingedreht ist, der mittels einer Montageschraube mit der Decke verbunden ist. Der Ausgleichskörper weist ein dem Halten der Montageschraube dienendes Kopfelement, ein dem Halten des Abstandsstabs dienendes Fusselement sowie ein Verbindungselement auf, an dessen oberen Ende das Kopfelement und an dessen unterem Ende das Fusselement angeformt ist. Der Ausgleichskörper ist aus einem flachen Metallstück derart gebogen, dass das Kopfelement um 90° auf die eine Seite und das Fussstück um 90° auf die andere Seite des Verbindungselements gerichtet ist. Auf diese Weise wird der Raum oberhalb des Fusselements freigehalten, so dass der Abstandsstab in diesen eingedreht werden kann. Nachteilig ist, dass diese Aufhängevorrichtung relativ viel Raum in Anspruch nimmt, ästhetisch nicht vorteilhaft in Erscheinung tritt und aufgrund der auftretenden Momente nicht stark belastbar ist.

Sofern der Ausgleichskörper nicht entsprechend massiv ausgestaltet ist, müssen dessen Abmessungen klein gehalten werden, wodurch ein relativ geringer Justierbereich resultiert. Weiterhin ist bei der Montage dieser Aufhängevorrichtung jeweils der axiale Abstand zwischen der Montageschraube und dem Abstandsstab zu berücksichtigen, wodurch eine präzise Montage erschwert wird.

Der vorliegenden Erfindung liegt daher die Aufgabe zugrunde, eine verbesserte justierbare Aufhängevorrichtung zu schaffen.

Insbesondere ist eine Aufhängevorrichtung zu schaffen, die mit geringem Aufwand herstellbar ist, die einen relativ grossen Justierbereich aufweist, die ästhetisch vorteilhaft in Erscheinung tritt und die höheren Belastungen standhält und vorzugsweise gegen Verbiegen gesichert ist.

Diese Aufgabe wird mit einer justierbaren Aufhängevorrichtung gelöst, welche die in Anspruch 1 angegebenen Merkmale aufweist. Vorteilhafte Ausgestaltungen der Erfindung sind in weiteren Ansprüchen angegeben.

Die justierbare Aufhängevorrichtung weist einen mehrfach gebogen verlaufenden, flachen Ausgleichskörper mit einem Kopfelement auf, das mit einer der Aufnahme einer Montageschraube dienenden ersten Öffnung versehen ist und das über ein Verbindungselement mit einem parallel zum Kopfelement und in die entgegen gesetzte Richtung geformten, vorzugsweise gebogenen, Fusselement verbunden ist, welches eine zweite Öffnung aufweist, die der Aufnahme eines Abstandsstabs dient, von dem eine Tragvorrichtung oder eine Last gehalten werden kann.

Erfindungsgemäss ist das Verbindungselement gegenüber dem Kopfelement und dem Fusselement derart geformt, vorzugsweise gebogen, dass die erste und die zweite Öffnung zumindest annähernd koaxial zu einer ersten Achse des Ausgleichskörpers angeordnet sind, die senkrecht zum Kopfelement und zum Fusselement sowie durch eine im Verbindungselement vorgesehene dritte Öffnung verläuft, durch die der Abstandsstab beim Justieren der Aufhängevorrichtung durchführbar ist.

Die der Aufnahme der Montageschraube dienende erste Öffnung im Kopfelement sowie die der Aufnahme des Abstandsstabs dienende zweite Öffnung im Fusselement liegen somit im Bereich einer Achse, entlang der die äusseren Kräfte auf den Ausgleichskörper einwirken. Der Ausgleichskörper weist daher die Funktion eines Zugstabs auf, bei dem keine störenden Momente auftreten, die zu Materialverbiegungen und somit zur Zerstörung der Aufhängevorrichtung führen können.

Die im Verbindungselement vorgesehene dritte Öffnung erlaubt es zudem, den Abstandsstab bis zur Montageschraube zu verschieben, weshalb ein weiter Justierbereich resultiert.

Die axiale Ausrichtung der drei Öffnungen im Kopfelement, im Verbindungselement und im Fusselement erlaubt es zudem, den Ausgleichskörper mit geringen Abmessungen und geringen Materialstärken zu fertigen. Die minimalen Abmessungen hängen dabei im Wesentlichen vom Durchmesser des Abstandsstabs und vom Durchmesser der Montageschraube ab. Die Materialdicke des Ausgleichskörpers wird hingegen unter Berücksichtigung der auftretenden Lasten gewählt.

Der Ausgleichskörper kann aus einem einzigen flachen oder mit Sicken versehenen und zumindest annähernd rechteckförmigen Metallstück gefertigt werden. Alternativ kann der Ausgleichskörper aus mehreren flachen oder mit Sicken versehenen und zumindest annähernd rechteckförmigen Metallstücken gefertigt werden. Die Anzahl der verwendeten Metallstücke wird dabei entsprechend der zu erwartenden Last festgelegt.

Das Einprägen von Sicken verleiht dem Ausgleichskörper eine deutlich erhöhte Festigkeit. Aus einem dünnen Blech können zudem stabile Ausgleichskörper mit geringem Aufwand gefertigt werden, wenn insbesondere im Verbindungselement eine oder vorzugsweise zwei oder mehrere Sicken vorgesehen werden.

Der Ausgleichskörper wird vorzugsweise symmetrisch zu einer zweiten Achse ausgestaltet ist, welche das Verbindungselement in der Mitte parallel zum Kopfelement und zum Fusselement durchläuft. Dadurch vereinfachen sich die Fertigung sowie die Handhabung des Ausgleichskörpers. Sofern das Kopfelement und das Fusselement tatsächlich identisch ausgestaltet sind, kann der Ausgleichskörper beliebig um 180° gedreht und installiert werden.

Die am Fusselement vorgesehene zweite und die am Verbindungselement vorgesehene dritte Öffnung werden vorzugsweise beide an den Abstandsstab angepasst, so dass dieser nach dem Einführen in die zweite und dritte Öffnung entlang der ersten Achse ausgerichtet gehalten wird. Dazu wird vorzugsweise vorgesehen dass die erste und die zweite Öffnung in der Projektion zur ersten Achse zumindest annähernd denselben Querschnitt aufweisen. Die langgestreckte dritte Öffnung im Verbindungselement, deren Rand vorzugsweise unmittelbar am Abstandsstab anliegt, verhindert dadurch, dass der Abstandsstab aus der ersten Achse weggebogen werden kann. Die dritte Öffnung dient in dieser vorzugsweisen Ausgestaltung daher nicht nur der Durchführung des Abstandsstabs, sondern auch zu dessen Führung entlang der ersten Achse und zu dessen Sicherung gegen seitliche Kraftweinwirkungen. In einer weiteren vorzugsweisen Ausgestaltung wird die dritte Öffnung mit einem Gewinde versehen, wodurch der Abstandsstab formschlüssig gehalten und spielfrei geführt wird.

Der mit einem Gewinde versehene Abstandsstab, beispielsweise eine Gewindestange, wird beispielsweise mittels wenigstens einer Schraubenmutter mit dem Fusselement verbunden. Alternativ kann die zweite Öffnung im Fusselement mit einem Gewinde versehen sein, in den der Abstandsstab eingedreht wird. In einer vorzugsweisen Ausgestaltung werden beide Montagemöglichkeiten miteinander kombiniert; d.h., der Abstandsstab wird in das Gewinde der zweiten Öffnung eingeführt und mittels wenigstens einer Schraubenmutter bzw. Kontermutter gesichert.

Das Verbindungselement kann mit zwei oder mehreren Biegezonen versehen werden. Möglich ist es auch, dem Verbindungselement eine kontinuierlich verlaufende Krümmung beispielsweise in der Form eines "S" zu verleihen. Nachteilig dabei ist, dass für eine bestimmte Grösse des Ausgleichskörpers eine bestimmte Werkzeugform erforderlich ist, die für andere Abmessungen des Verbindungselements nicht mehr einsetzbar ist. Mit einem Werkzeug hingegen, mittels dessen nur einzelne Biegungen in das Verbindungselement eingeprägt werden, lassen sich hingegen beliebig dimensionierte Ausgleichskörper bearbeiten.

In einer vorzugsweisen Ausgestaltung weist das Verbindungselement, nebst den Biegezonen beim Kopfelement und beim Fusselement, wenigstens zwei weitere Biegezonen auf, die das Verbindungselement in ein Kopfteilelement, ein Fussteilelement und ein dazwischen liegendes Mittelteilelement unterteilen. Dabei wird vorgesehen, dass das Kopfelement und das Kopfteilelement und/oder das Fusselement und das Fussteilelement vorzugsweise einen rechten Winkel einschliessen. Dadurch wird gewährleistet, dass unterhalb des Kopfelements und oberhalb des Fusselements ein Raum frei gehalten bleibt, der nicht vom Verbindungselement durchkreuzt wird. In diesen freigehaltenen Räumen können die Montagemittel, wie die Montageschraube, der Abstandsstab sowie allfällige Schraubenmuttern bequem eingesetzt und bedient werden.

In einer vorzugsweisen Ausgestaltung weist das Verbindungselement zwei Mittelteilelemente auf, die über ein erstes elastisches Element aus Kunststoff oder Gummi miteinander verbunden sind. Das elastische Element ist vorzugsweise quaderförmig ausgestaltet und mittels eines Klebstoffs mit den einander zugewandten Flächen der beiden Mittelteilelemente verbunden und weist eine vierte Öffnung auf, die zu den dritten Öffnungen in den beiden Mittelteilelementen korrespondiert. Bei dieser Lösung sind das Kopfelement und das Fusselement voneinander fast vollständig entkoppelt, so dass keine Schwingungen vom Fusselement auf das Kopfelement und somit auf die Decke oder das Trägerprofil übertragen werden. Auf diese Weise wird das in Gebäuden häufig auftretende Problem der Übertragung von Schwingungen, insbesondere Schallschwingungen weitgehend vermieden. Sofern das erste elastische Element geneigt zwischen den beiden Mittelteilelementen gehalten ist, kann das erste elastische Element störende Schwingungen besonders gut aufnehmen und dämpfen. Somit wird nicht nur die Übertragung von Schwingungen verhindert, sondern es gelingt gleichzeitig, diese Schwingungen weitgehend zu eliminieren. Heute erhältliche Klebstoffe erlauben es einer derart gefertigten justierbaren Aufhängevorrichtung, grosse Lasten zu tragen, ohne dass sich das erste elastische Element von den Mittelteilelementen löst.

Vorzugsweise wird vorgesehen, dass die beiden Mittelteilelemente einander überlappen, so dass das dazwischen gehaltene elastische Element vom zweiten gegen das erste Mittelteilelement gedrückt wird. Auf diese Weise wirkt die vertikal ausgerichtete Kraftkomponente als Druckkraft und nicht als Zugkraft auf das elastische Element ein.

Bei dieser besonders bevorzugten Ausgestaltung wird das elastische Element zwischen den beiden Mittelteilelementen gehalten und kann zusätzlich durch mechanische Teile fixiert werden. Beispielsweise sind an den einander zugewandten Seiten der beiden Mittelteilelemente Fixierelemente vorgesehen, die in das elastische Element eindringen können.

In einer weiteren vorzugsweisen Ausgestaltung ist vorgesehen, dass die beiden Mittelteilelemente das elastische Element einschliessen und mit einem vorzugsweise hakenförmigen Kopplungselement in eine Öffnung des benachbarten Teils des Ausgleichskörpers eingreifen können. Sofern das elastische Element in einem Brandfall zerstört wird, bleiben die beiden Teile des Ausgleichskörpers miteinander verbundenen, so dass der installierte Gegenstand, gegebenenfalls das installierte Rohr, gehalten bleibt. Sofern der Abstandsstab jedoch auch nach der Zerstörung des elastischen Elements beide Mittelteilelemente durchdringt, so bleibt die Verbindung auch ohne die Kopplungselemente erhalten.

Besonders einfach ist die Fertigung des Ausgleichskörpers, wenn für das Kopfelement und das Kopfteilelement sowie das Fusselement und das Fussteilelement gleiche Abmessungen gewählt werden. Einerseits wird dadurch genügend Montageraum zur Verfügung gestellt. Andererseits ergibt sich ein vorteilhafter ästhetischer Eindruck.

Das Kopfelement und das Fusselement werden vorzugsweise rechteckig oder quadratisch, gegebenenfalls abgerundet, ausgestaltet. Die Länge und die Breite des Kopfelements und des Fusselements werden vorzugsweise um einen Faktor, der im Bereich zwischen 1.5, bis 4 liegt, grösser gewählt, als der Durchmesser der ersten bzw. der zweiten Öffnung. Dadurch wird die erforderliche Festigkeit des Ausgleichskörpers erzielt. Gleichzeitig werden die Abmessungen des Ausgleichskörpers relativ klein gehalten.

Die Mittel, mit denen das Kopfelement zum Beispiel mit der Decke oder einem Trägerprofil verbunden wird, werden vom Installateur bedarfsweise gewählt. Als Montageschraube wird vorzugsweise ein in die Decke einsenkbarer Segmentanker verwendet, der eine Gewindestange und wenigstens eine Schraubenmutter aufweist.

In einer weiteren vorzugsweisen Ausgestaltung der justierbaren Aufhängevorrichtung wird das Kopfelement und/oder das Fusselement mit wenigstens einem zweiten elastischen Element aus Kunststoff oder Gummi versehen. Durch dieses zweite elastische Element wird verhindert oder weitgehend vermieden, dass Schwingungen, über den Abstandsstab auf den mit dem Kopfelement verbundenen Körper übertragen werden.

In weiteren vorzugsweisen Ausgestaltungen wird anstelle eines starren Ausgleichskörpers ein elastischer Ausgleichskörper vorgesehen, der Schwingungen aufnehmen und dämpfen kann. Zur Einstellung der Elastizität wird die Materialdicke des Verbindungselements vorzugsweise geringer als die Materialdicke des Kopfelements und/oder des Fusselements gewählt.

Durch die beschriebenen Massnahmen können Schwingungen, die von einem installierten Gegenstand, gegebenenfalls einer Tragvorrichtung, auf die justierbare Aufhängevorrichtung einwirken, wirkungsvoll gedämpft und unterdrückt werden. Das Problem der störenden Schallübertragung in Gebäuden kann dadurch weitgehend beseitigt werden. Die beschriebenen Massnahmen der Verwendung eines ersten oder einer zweiten elastischen Elements oder der Verwendung eines elastischen Ausgleichskörpers können wahlweise einzeln oder in Kombination angewendet werden.

Der Abstandsstab kann auf beliebige Weise mit einer Trägervorrichtung, wie einer Rohrschelle, einer Kabelführungsvorrichtung oder mit einer abgehängten Decke, verbunden werden. Beispielsweise kann der Abstandsstab fest mit einem Bügel einer Rohrschelle verbunden oder verschraubt sein. Alternativ kann der Abstandsstab in eine Öffnung im Bügel einer Rohrschelle eingesetzt und durch ein an der Unterseite des Abstandsstabs vorgesehenes Flanschelement gehalten werden. Alternativ kann der Abstandsstab an der Unterseite mit Schraubenmuttern oder Haken sowie weiteren Verbindungsmitteln versehen sein.

Nachfolgend wird die Erfindung anhand von Zeichnungen näher erläutert. Dabei zeigen:
- Fig. 1: eine über einen Abstandsstab 3 mit einer Rohrschelle 8 verbundene erfindungsgemässe justierbare Aufhängevorrichtung, die einen Ausgleichskörper 1 mit einem mit einer Decke 9 verbundenen Kopfelement 11, mit einem mittels Schraubenmuttern 31 mit dem Abstandsstab 3 verbundenen Fusselement 12 und mit einem Verbindungselement 12, welches eine Öffnung 1221 zur Durchführung des Abstandsstabs 3 aufweist;
- Fig. 2: die justierbare Aufhängevorrichtung von Figur 1, bei der das Fusselement 13 des Ausgleichskörpers 1 mit einer Gewindebohrung 131 versehen ist, in der der Abstandsstab 3 gehalten ist;
- Fig. 3a: den Ausgleichskörper 1 von Figur 1 in räumlicher Darstellung;
- Fig. 3b: den Ausgleichskörper 1 von Figur 3a von der anderen Seite gesehen;
- Fig. 4a: die mit einer Rohrschelle 8 verbundene justierbare Aufhängevorrichtung von Figur 1;
- Fig. 4b: die justierbare Aufhängevorrichtung von Figur 4a von der anderen Seite gesehen;
- Fig. 5: eine vorzugsweise ausgestaltete justierbare Aufhängevorrichtung, die einen zweiteiligen Ausgleichskörper 1 mit einem aus einem ersten Teil 121, 122' und einem zweiten Teil 122", 123 bestehenden Verbindungselement 12 aufweist, die durch ein elastisches Element 51 miteinander verbunden sind;
- Fig. 6: den Ausgleichskörper 1 von Figur 5 in einer räumlichen Explosionsdarstellung;
- Fig. 7: die Aufhängevorrichtung von Figur 5 mit einer bevorzugten Anordnung der beiden Teile 121, 122', und 122", 123 des Verbindungselements 12, die einander übergreifen und das elastische Element 51 dazwischen einschliessen;
- Fig. 8: die Aufhängevorrichtung von Figur 7 mit einem am ersten Teil 121, 122' vorgesehenen Kopplungselement 1222, welches in das zweite Teil 122", 123 eingreift, und einem am zweiten Teil 122", 123 vorgesehenen Kopplungselement 1222, welches in das erste Teil 121, 122' eingreift; und
- Fig. 9: die beiden Teile 121, 122'; 122" , 123 des Ausgleichskörpers 1, die mit dem Halten des elastischen Elements 50 dienenden Fixierelementen 1228 versehen sind.

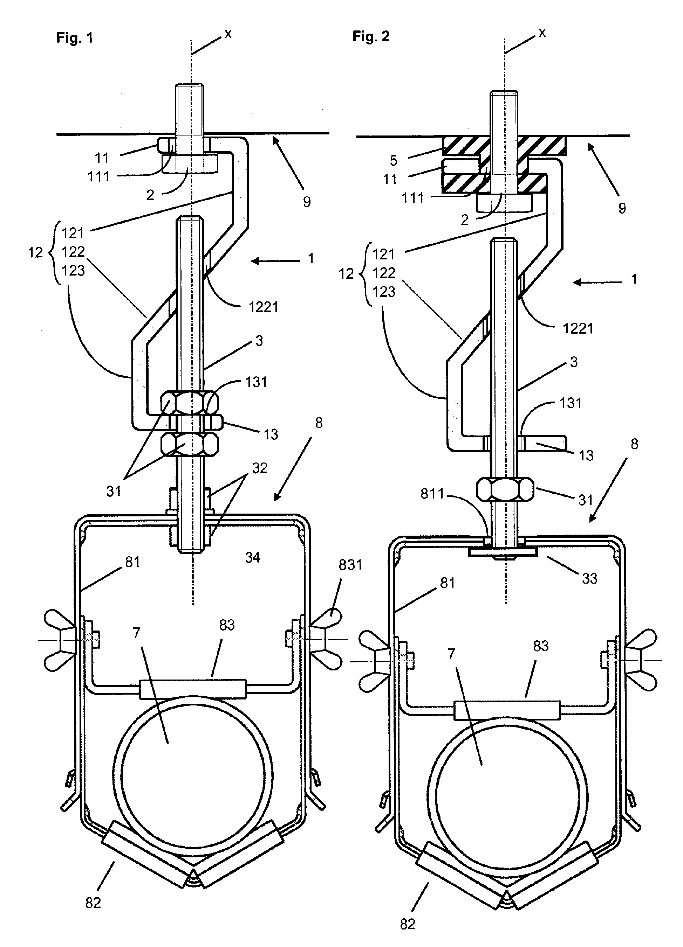

Figur 1 zeigt eine erfindungsgemässe justierbare Aufhängevorrichtung, die in dieser beispielsweise Ausgestaltung einerseits an eine Decke 9 befestigt und andererseits durch einen in der Höhe justierbaren Abstandsstab 3 mit einer Rohrschelle 8 verbunden ist.

Die erfindungsgemässe Aufhängevorrichtung kann über den Abstandsstab 3 jedoch mit beliebigen dem Fachmann bekannten Vorrichtungen und Gegenständen verbunden werden, und ist nicht auf die Verwendung mit Rohrschellen begrenzt. Ebenso kann die erfindungsgemässe justierbare Aufhängevorrichtung nicht nur an einer Decke 9, sondern an beliebigen Gegenständen befestigt werden. Dabei wird die justierbare Aufhängevorrichtung normalerweise senkrecht ausgerichtet, wie dies in Figur 1 gezeigt ist. Alternativ kann die justierbare Aufhängevorrichtung auch waagerecht, zum Beispiel an einer Wand oder einem Trägerprofil, montiert werden. Bei einer waagrechten Montage weist das nachstehend beschriebene Kopfelement 11 vorzugsweise grössere Abmessungen auf.

Die justierbare Aufhängevorrichtung weist einen Ausgleichskörper 1 auf, welcher ein Kopfelement 11 und ein Fusselement 13 umfasst, die durch ein Verbindungselement 12 miteinander verbunden sind. Das Kopfelement 11 weist eine Montageöffnung 111 auf, in die eine mit der Decke 9 verbundene Montageschraube 2 eingefügt ist. Das Fusselement 13 weist eine Eingangsöffnung 131 auf, in die eine als Abstandsstab dienende Gewindestange 3 eingeführt ist. Das Verbindungselement 12 weist etwa in der Mitte eine Durchtrittsöffnung 1221 auf, in die hinein die Gewindestange 3 verschiebbar ist. Es ist ersichtlich, dass die Montageöffnung 111 des Kopfelements 11, die Eingangsöffnung 131 des Fusselements 13 und die Durchtrittsöffnung 1221 des Verbindungselement koaxial zur Längsachse x des Ausgleichskörpers verläuft. Die Längsachse x verläuft vorzugsweise exakt durch die Mittelpunkte der genannten Öffnungen 111, 1221, 131. Das Kopfelement 11 und das Fusselement 13 sind an den betreffenden Enden des Verbindungselements um 90° in einander entgegen gesetzte Richtungen ausgerichtet. Damit die Montageöffnung 111 und die Eingangsöffnung 131 trotzdem übereinander liegen, ist es erforderlich, dass zumindest ein Teil des Verbindungselements 12 schräg zur Längsachse x verläuft.

In dieser vorzugsweisen Ausgestaltung weist das Verbindungselement 12 ein Kopfteilelement 121, ein Mittelteilelement 122 und ein Fussteilelement 123 auf. Das Kopfteilelement 121 und das Fussteilelement 123 verlaufen senkrecht zum Kopfelement 11 bzw. zum Fusselement 13 sowie parallel zur Längsachse x. Dabei weisen das Kopfteilelement 121 und das Fussteilelement 123 etwa dieselbe Länge wie das Kopfelement 11 bzw. das Fusselement 13 auf. Deren Dimensionen sind derart gewählt, dass ein Raum unterhalb des Kopfelements 11 sowie oberhalb des Fusselements 13 frei gehalten bleibt, in dem der freie Zugang zur Montageschraube 2 sowie zu den Schraubenmuttern 31 gewährleistet ist, so dass diese mit einem Werkzeug erfasst und gedreht werden können.

Es ist ersichtlich, dass der Ausgleichskörper 1 und somit die gesamte justierbare Aufhängevorrichtung nur wenig Raum in Anspruch nimmt und es trotzdem erlaubt, die Gewindestange 3 bzw. den Abstandsstab über einen weiten Bereich zu verschieben, um die Höhe der gehaltenen Rohrschelle 8 einzustellen.

Die Gewindestange 3 ist in die im Verbindungselement 12 bzw. im Mittelteilelement 122 vorgesehene Durchtrittsöffnung 1221 eingeführt und wird von dieser vorzugsweise mit geringem oder gar keinem Spiel gehalten. Dazu wird vorgesehen, dass die in der Projektion entlang der Längsachse x vorgesehenen Querschnitte der Eingangsöffnung 131 und der Durchtrittsöffnung 1221 vorzugsweise gleich gross sind, so dass für die seitliche Verschiebung der Gewindestange 3 kein Raum verbleibt. In vorzugsweisen Ausgestaltungen kann die Durchtrittsöffnung mit einem Gewinde versehen werden, durch die die Gewindestange 3 formschlüssig und spielfrei gehalten wird. Auf diese Weise wird beim Auftreten von Zugkräften eine Verdrehung oder gar eine Dehnung der Aufhängevorrichtung weitgehend vermieden. Zu diesem Zweck kann auch eine Gewindehülse in die Durchtrittsöffnung 1221 eingesetzt und entlang der Längsachse x ausgerichtet werden.

Wie erwähnt, wird von der Gewindestange 3 eine Rohrschelle 8 gehalten. Die vorzugsweise ausgestaltete Rohrschelle 8, die ein Rohr 7 hält, weist ein oberes Bügelelement 81 auf, in das ein unteres Bügelelement 82 eingehängt ist, auf dem das installierte Rohr 7 ruht. Das obere Bügelelement 81 weist ein nach unten geöffnetes U-Profil mit zwei Schenkeln auf, zwischen denen ein Niederhalter 83 vorgesehen ist, der gegen das Rohr 7 geführt und mittels Schrauben 831 fixiert ist, die einen manuell bedienbaren Flügelkopf aufweisen. Auf der Unterseite und der Oberseite des oberen Bügelelements 81 sind ferner Schraubenmuttern 32 oder mit dem oberen Bügelelement 81 verbundene Gewindehülsen 32 vorgesehen, mittels derer die Gewindestange 3 bzw. der Abstandsstab gehalten ist.

Nach dem Lösen der am Fusselement 13 vorgesehenen Schraubenmuttern 31 kann die Gewindestange 3 durch diese Schraubenmuttern 31 hindurch nach oben oder nach unten verschoben und präzise justiert werden.

Figur 2 zeigt die justierbare Aufhängevorrichtung von Figur 1 mit einem Ausgleichskörper 1, dessen Kopfelement 11 über ein elastisches Element 5 mit der Decke 9 verbunden ist. Das Kopfelement 11 ist gegenüber dem Kopfelement 11 von Figur 1 vergrössert und liegt flächig am elastischen Element 5 an, welches bis in die erste Öffnung 111 hinein geführt ist und das Kopfelement vorzugsweise beidseitig überlappt, so dass die mit der Decke 9 verbundene Montageschraube 2 vollständig vom Ausgleichskörper 1 getrennt ist. Dadurch wird die Übertragung von Schallschwingungen von der Rohrschelle 8 auf die Decke 9 verhindert.

Bei dieser vorzugsweisen Ausgestaltung der justierbaren Aufhängevorrichtung sind die im Fusselement 13 des Ausgleichskörpers 1 vorgesehene Eingangsöffnung 131 sowie die im Verbindungselement 12 vorgesehene Durchtrittsöffnung 1221 je mit einer Gewindebohrung versehen. Die Gewindestange 3 ist daher sowohl im Fusselement 13, als auch im Verbindungselement 12 drehbar und spielfrei gehalten. Die Gewindestange 3, an deren unteren Ende ein Flanschelement 33 Fest oder lösbar vorgesehen ist, ist durch eine Öffnung 811 im oberen Bügelelement 81 der Rohrschelle 8 hindurch geführt. Die Gewindestange 3 kann in den genannten Öffnungen 811,131, 1221 gedreht und wahlweise justiert und vertikal verschoben werden. In der Folge wird die Gewindestange 3 vorzugsweise mittels einer Kontermutter 31 fixiert.

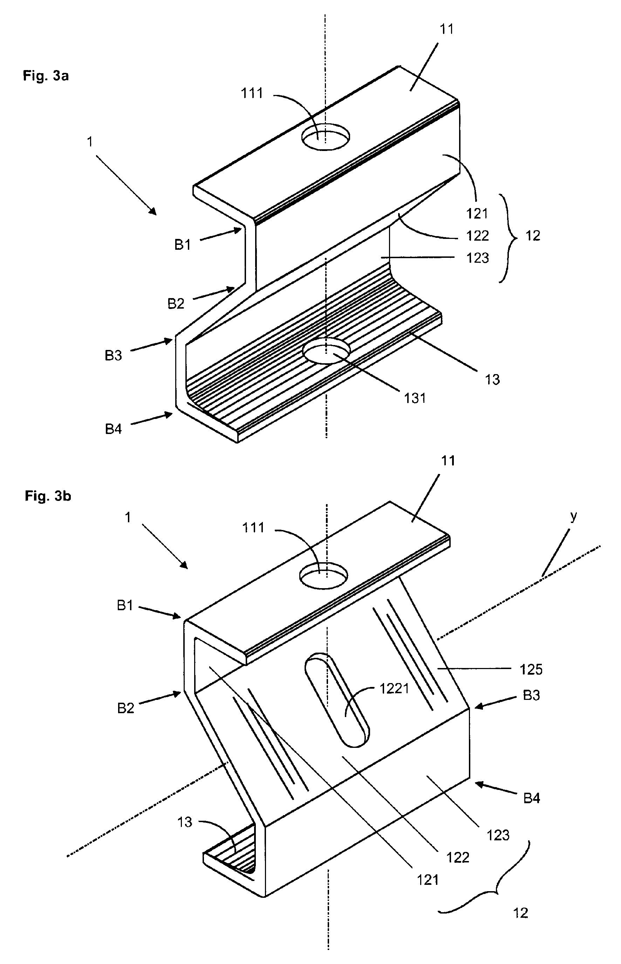

Figur 3a zeigt den Ausgleichskörper 1 von Figur 1 in räumlicher Darstellung. In dieser Ansicht sind die Montageöffnung 111 im Kopfelement 11 sowie die Eingangsöffnung 131 im Fusselement 13 besonders gut sichtbar. Ferner ist gezeigt, dass der aus einem Stück gefertigte Ausgleichskörper 1 vier Biegezonen B1, B2 B3 und B4 aufweist. An den Biegezonen B1 und B4 wurden das Kopfelement 11 gegenüber dem Kopfteilelement 121 und das Fusselement 13 gegenüber dem Fussteilelement 123 um 90° in verschiedene Richtungen gedreht. Das Kopfteilelement 121 und das Fussteilelement 123 wurden zudem um etwa 45° gegenüber dem Mittelteilelement 122 gebogen. Diese Biegungen in den Zonen B2 und B3 sind dabei jeweils von der Länge des Mittelteilelements 122 abhängig und variieren typischerweise im Bereich von 30° bis 60°. In bestimmten Ausgestaltungen ist es jedoch vorteilhaft, wenn ein Biegewinkel von 90° vorgesehen ist. Bei der Verwendung eines Biegewinkels von 90° ist es z.B. einfacher, je ein Gewinde in die zweite und dritte Öffnung 131, 1221 einzuarbeiten. Eine Biegung >90° ist nur in Ausnahmefällen von Vorteil. Das Kopfteilelement 121 und das Fussteilelement 123 werden vorzugsweise mit gleicher Länge gewählt, so dass z.B. symmetrische Ausgestaltungen des Ausgleichskörpers 1 realisiert werden. Insbesondere bei der Verwendung eines Biegewinkels von 90° ist es in verschiedenen möglichen Anwendungsfällen von Vorteil, unterschiedliche Längen für das Kopfteilelement 121 und das Fussteilelement 123 vorzusehen. Sofern unterhalb des Kopfelements 11 mehr Raum benötigt wird, kann eine grössere Länge für das Kopfteilelement 121 vorgesehen werden.

Figur 3b zeigt den Ausgleichskörper 1 von Figur 3a von der anderen Seite. Bei dieser Ansicht ist das Mittelteilelement 122 mit der darin vorgesehenen Durchtrittsöffnung 1221 gut ersichtlich, die aufgrund der Neigung des Mittelteilelements 122 in die Länge gezogen ist. Es ist symbolisch gezeigt, dass insbesondere das Mittelteilelement 122 der Ausgleichskörpers vorteilhaft mit Sicken versehen werden kann, welche hier von unten nach oben verlaufen und dem Mittelteilelement 122 eine erhöhte Biegesteifigkeit verleihen. Durch das Einprägen von Sicken kann das unerwünschte Verbiegen des Ausgleichskörpers 1 vermieden werden. Gleichzeitig wird es möglich, dass die Materialdicke, das Gewicht sowie die Herstellungskosten des Ausgleichskörpers zu reduzieren.

Es ist ferner ersichtlich, dass der Ausgleichskörper 1 symmetrisch zu einer Querachse y ausgestaltet ist, die in der Mitte des Mittelteilelements 122 durch die Durchtrittsöffnung sowie parallel zum Kopfelement 11 und zum Fusselement 13 verläuft.

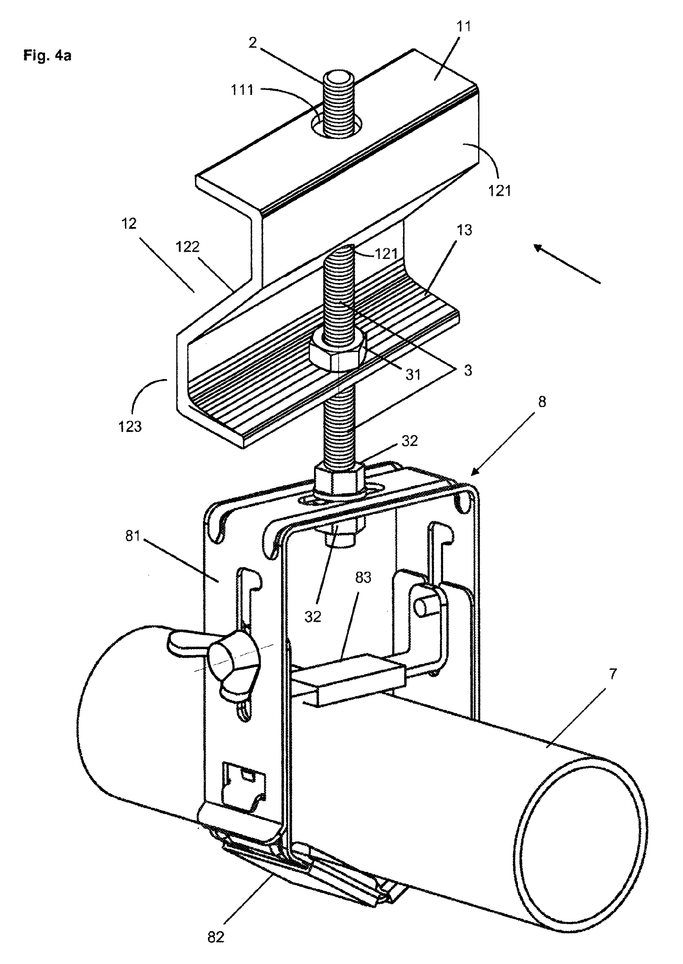

Figur 4a zeigt die mit einer Rohrschelle 8 verbundene justierbare Aufhängevorrichtung von Figur 1 in räumlicher Darstellung.

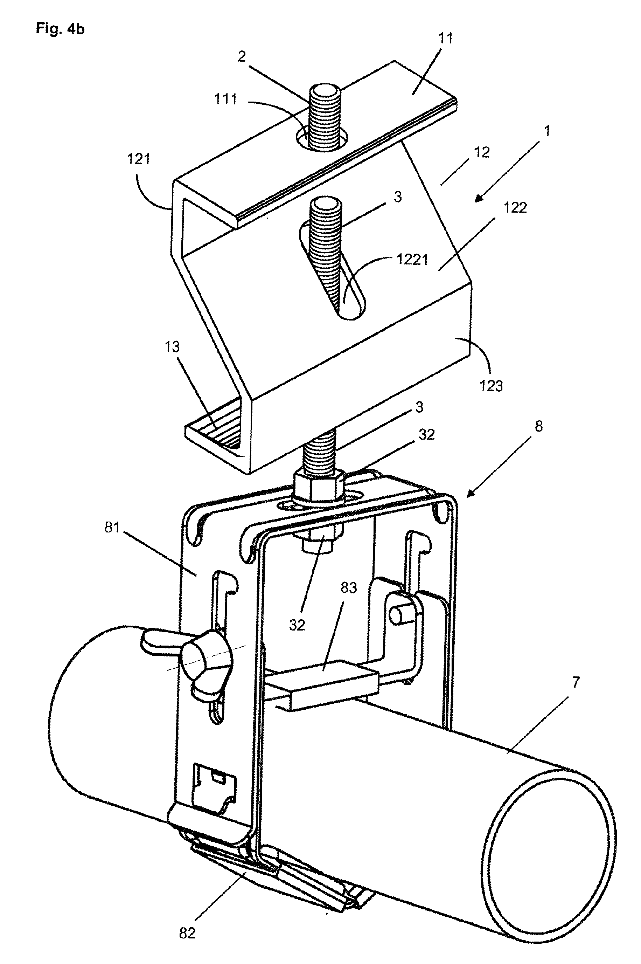

Figur 4b zeigt die justierbare Aufhängevorrichtung von Figur 4a von der anderen Seite gesehen.

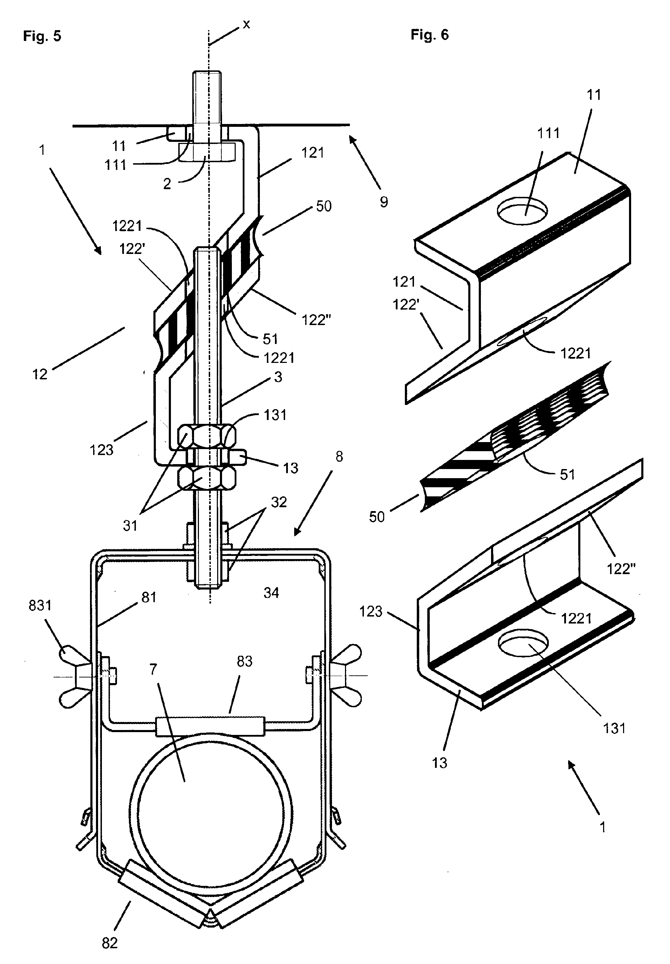

In Figur 5 ist eine weitere vorzugsweise Ausgestaltung der justierbaren Aufhängevorrichtung gezeigt, die eingesetzt wird, wenn eine optimale Schalldämmung mit minimalem Aufwand erzielt werden soll. In dieser Ausgestaltung besteht das Verbindungselement 12 des Ausgleichskörpers 1 aus zwei Teilen. Da bei sind zwei Mittelteilelemente 122', 122'' vorgesehen, die über ein elastisches Element 50 aus Kunststoff oder Gummi miteinander verbunden sind. Das elastische Element 50, das vorzugsweise quaderförmig ausgestaltet und mittels eines Klebstoffs mit den einander zugewandten Flächen der beiden Mittelteilelemente 122', 122'' verbunden ist, weist eine Öffnung 51 auf, die zu den Durchtrittsöffnungen 1221 in den beiden Mittelteilelementen 122', 122" korrespondiert. Bei der gezeigten Anordnung des elastischen Elements 50 mit einer Neigung von 45° treten nicht nur Zugspannungen sondern auch Scherspannungen auf, durch die auftretenden Schwingungen wirkungsvoll gedämpft werden. Sofern die Aufhängevorrichtung Schwingungen aufnimmt und dämpft, kann bei den getragenen Vorrichtungen, wie der Rohrschelle 8, auf entsprechende Massnahmen verzichtet werden, wodurch letztendlich Einsparungen resultieren.

Figur 6 zeigt den Ausgleichskörper 1 von Figur 5 in einer räumlichen Explosionsdarstellung. In dieser vorzugsweisen Ausgestaltung besteht der Ausgleichskörper 1 aus zwei identischen Teilen 11, 122' und 13, 122" die kostengünstig hergestellt werden können. Die Abmessungen des Ausgleichskörpers 1 werden entsprechend den auftretenden Lasten gewählt. Da die Mittelteilelemente 122', 122" relativ grosse Flächen aufweisen, entstehen grosse Verbindungsflächen, die im Bereich der vorgesehenen Lasten eine sichere Verbindung zwischen den Mittelteilelementen 122', 122" und dem elastischen Körper 51 gewährleisten.

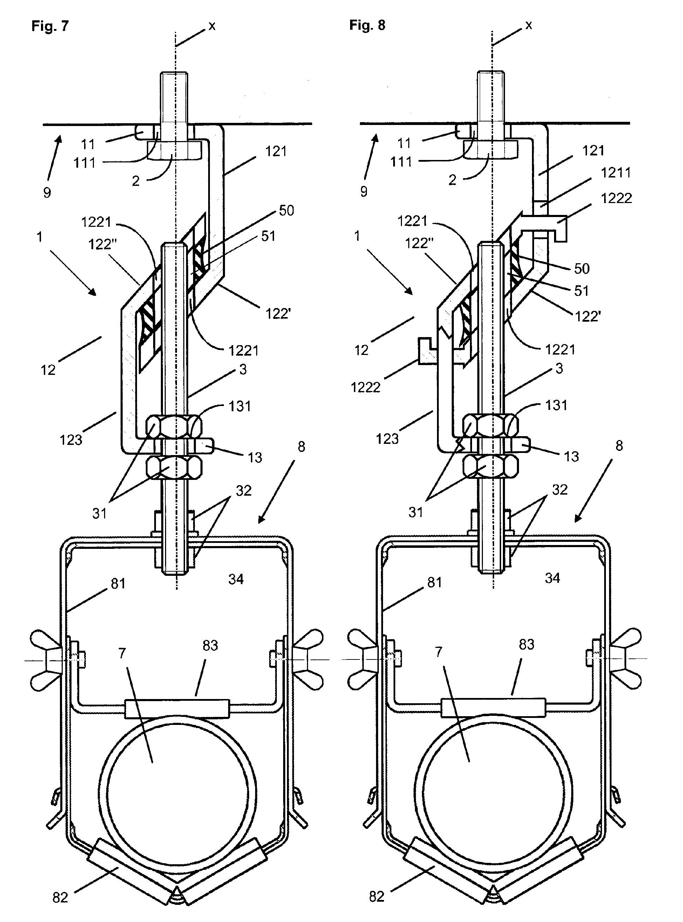

Figur 7 zeigt die Aufhängevorrichtung von Figur 5 mit einer bevorzugten Anordnung der beiden Teile 121, 122' und 122" , 123 des Verbindungselements 12 des Ausgleichskörpers 1. Die beiden Teile 121, 122' und 122", 123 des Verbindungselements 12 bzw. die Mittelteilelemente 122' und 122" übergreifen einander und schliessen das elastische Element 51 dazwischen ein, so dass dieses auf Druck und Scherung, jedoch nicht auf Zug belastet wird. Sofern der Abstandsstab 3 beide Mittelteilelemente 122' und 122" durchstösst, so bleibt die Verbindung zwischen den beiden Teile 121, 122' und 122", 123 des Verbindungselements 12 auch dann erhalten, wenn das elastische Element 50 gegebenenfalls durch Brandeinwirkung zerstört wird.

Figur 8 zeigt die Aufhängevorrichtung von Figur 7 mit einem am ersten Teil 121, 122' vorgesehenen hakenförmigen Kopplungselement 1222, welches in eine Öffnung 1211 am zweiten Teil 122" , 123 eingreift, und einem am zweiten Teil 122" , 123 vorgesehenen hakenförmigen Kopplungselement 1222, welches in eine Öffnung 1211 am ersten Teil 121, 122' eingreift. Die hakenförmigen Kopplungselemente 1222 sind an den freien Enden der Mittelteilelemente 122', 122" vorgesehen und greifen in die Öffnungen 1211 ein, die am Kopfteilelement 121 bzw. am Fussteilelement 123 vorgesehen sind. Auf diese Weise wird gewährleistet, dass die beiden Teile 121, 122' und 122", 123 des Verbindungselements 12 unabhängig von der Position des Abstandsstabs 3 miteinander verbunden bleiben, wenn das elastische Element 50 ausfällt. Installierte Gegenstände, wie Rohre, bleiben daher auch im Brandfall sicher gehalten.

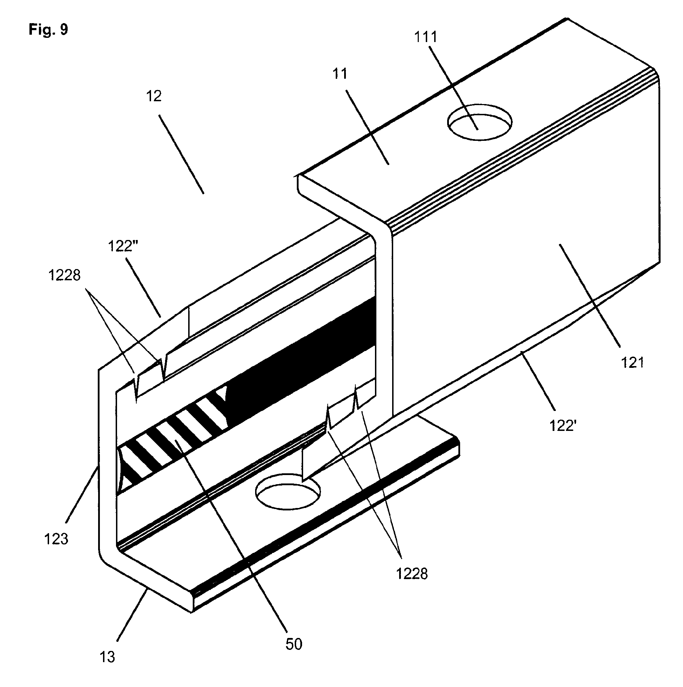

Figur 9 zeigt die beiden Teile 121, 122'; 122", 123 des Ausgleichskörpers 1, die mit dem Halten des elastischen Elements 50 dienenden Fixierelementen 1228 versehen sind. Die Fixierelemente 1228 werden vorzugsweise aus den Mittelteilelementen 122', 122" ausgeschnitten und gegen das elastische Element 50 gedreht, so dass sie in dieses Eindringen können. Auf diese Weise bleibt das elastische Element 50 zwischen den beiden Mittelteilelementen 122', 122" fixiert, ohne dass weitere Montagemittel erforderlich sind. weiterhin ist es möglich, das elastische Elemente 50 mittels Flanschelementen festzuklemmen.

Wie erwähnt, kann die erfindungsgemässe justierbare Aufhängevorrichtung zum Tragen und Halten verschiedenartiger Lasten und Tragvorrichtungen eingesetzt werden. Die Dimensionen und das verwendete Material werden vom Fachmann entsprechenden vorliegenden Anforderungen gewählt. Dabei werden die auftretenden Lasten sowie der Installationsort berücksichtigt, an dem entsprechende äussere Einwirkungen, wie intensive Feuchtigkeit und Wärme, auftreten können.

Dabei können auch funktionelle Anpassungen vorgenommen werden. Beispielsweise kann vorgesehen werden, dass die Aufhängevorrichtung minimale Pendelbewegungen ausführen kann, um Schwingungen aufzunehmen. Weiterhin können die genannten oder weitere elastische Elemente an anderen Verbindungsstellen vorgesehen werden.

## Patentansprüche

1. Justierbare Aufhängevorrichtung mit einem mehrfach gebogen verlaufenden, flachen Ausgleichskörper (1), der ein Kopfelement (11) aufweist, das mit einer der Aufnahme einer Montageschraube (2) dienenden ersten Öffnung (111) versehen ist und das über ein Verbindungselement (12) mit einem parallel zum Kopfelement (11) und in die entgegen gesetzte Richtung geformten, vorzugsweise gebogenen, Fusselement (13) verbunden ist, welches eine zweite Öffnung (131) aufweist, die der Aufnahme eines Abstandsstabs (3) dient, von dem eine Tragvorrichtung oder eine Last gehalten werden kann, wobei, das Verbindungselement (12) gegenüber dem Kopfelement (11) und dem Fusselement (12) derart geformt, vorzugsweise gebogen, ist, dass die erste und die zweite Öffnung (111, 131) zumindest annähernd koaxial zu einer ersten Achse (x) des Ausgleichskörpers (1) angeordnet sind, die senkrecht zum Kopfelement (111) und zum Fusselement (112) ist, dardurch gekennzeichnet dass eine im Verbindungselement (12) vorgesehene dritte Öffnung (1221) verläuft, in die der Abstandsstab (3) beim Justieren der Aufhängevorrichtung einführbar ist.

2. Justierbare Aufhängevorrichtung nach Anspruch 1, **dadurch gekennzeichnet, dass** der Ausgleichskörper (1) aus zwei Stücken oder dass der Ausgleichskörper (1) einstückig aus einem flachen oder mit Sicken (125) versehenen und zumindest annähernd rechteckförmigen Metallstück oder aus mehreren flachen oder mit Sicken (125) versehenen und zumindest annähernd rechteckförmigen identischen Metallstücken gefertigt ist.

3. Justierbare Aufhängevorrichtung nach Anspruch 1 oder 2, **dadurch gekennzeichnet, dass** der Ausgleichskörper (1) zumindest annähernd symmetrisch zu einer zweiten Achse (y) ausgestaltet ist, welche das Verbindungselement (12) parallel zum Kopfelement (11) und zum Fusselement (13) durchläuft.

4. Justierbare Aufhängevorrichtung nach Anspruch 1, 2 oder 3, **dadurch gekennzeichnet, dass** die am Fusselement (13) vorgesehene zweite und die am Verbindungselement (12) vorgesehene dritte Öffnung (131, 1221) in der Projektion zur ersten Achse (x) zumindest annähernd denselben Querschnitt aufweisen.

5. Justierbare Aufhängevorrichtung nach einem der Ansprüche 1-4, **dadurch gekennzeichnet, dass** der mit einem Gewinde versehene Abstandsstab (3) mittels wenigstens einer Schraubenmutter (31) mit dem Fusselement (13) verbunden und/oder in einem Gewinde gehalten ist, welches in der am Fusselement (13) vorgesehenen zweiten Öffnung (131) vorgesehen ist.

6. Justierbare Aufhängevorrichtung nach einem der Ansprüche 1-5, **dadurch gekennzeichnet, dass** der Ausgleichskörper (1) zwei ersten Biegezonen (B1, B4) aufweist, über die das Verbindungselement (12) mit dem Kopfelement (11) bzw. dem Fusselement (13) verbunden ist.

7. Justierbare Aufhängevorrichtung nach Anspruch 6, **dadurch gekennzeichnet, dass** das Verbindungselement (12) wenigstens zwei weitere Biegezonen (B2, B3) aufweist, die das Verbindungselement (12) in ein Kopfteilelement (121), ein Fussteilelement (123) und ein dazwischen liegendes Mittelteilelement (122) unterteilen, wobei das Kopfteilelement (121) und das Fussteilelement (123) gleiche oder unterschiedliche Längen aufweisen.

8. Justierbare Aufhängevorrichtung nach Anspruch 7, **dadurch gekennzeichnet, dass** das Verbindungselement (12) zwei vorzugsweise ineinander eingreifende Mittelteilelemente (122', 122") aufweist, die übereinander oder untereinander angeordnet sind und ein erstes elastisches Element aus Kunststoff oder Gummi dazwischen einschliessen, das eine vierte Öffnung (51) aufweist, die zu den dritten Öffnungen in den beiden Mittelteilelementen (122) korrespondiert.

9. Justierbare Aufhängevorrichtung nach Anspruch 7 oder 8, **dadurch gekennzeichnet, dass** das Kopfelement (11) und das Kopfteilelement (121) und/oder das Fusselement (13) und das Fussteilelement (123) einen rechten Winkel einschliessen und vorzugsweise gleich lang sind.

10. Justierbare Aufhängevorrichtung nach Anspruch 7, 8 oder 9, **dadurch gekennzeichnet, dass** das Kopfteilelement (121) gegenüber dem Mittelteilelement (122, 122') um einen Winkel im Bereich von 30° bis 90°, vorzugsweise 45°, abgewinkelt ist und/oder dass das Fussteilelement (123) gegenüber dem Mittelteilelement (122, 122") um einen vorzugsweise identischen Winkel im Bereich von 30° bis 90°, vorzugsweise 45°, abgewinkelt ist.

11. Justierbare Aufhängevorrichtung nach einem der Ansprüche 1-10, **dadurch gekennzeichnet, dass** die Länge und/oder die Breite des vorzugsweise rechteckig oder quadratisch ausgestalteten Kopfelements (11) und/oder des vorzugsweise rechteckig oder quadratisch ausgestalteten Fusselements (13) einen Faktor n grösser sind als der Durchmesser der ersten bzw. der zweiten Öffnung (111; 131), wobei der Faktor n im Bereich von 1,5 bis 4 liegt.

12. Justierbare Aufhängevorrichtung nach einem der Ansprüche 1-11, **dadurch gekennzeichnet, dass** das Kopfelement (11) und/oder das Fusselement (13) mit wenigstens einem zweiten elastischen Element (5) aus Kunststoff oder Gummi versehen ist, welches der Dämmung und Dämpfung von mechanischen Schwingungen dient.

13. Justierbare Aufhängevorrichtung nach einem der Ansprüche 1-12, **dadurch gekennzeichnet, dass** der Ausgleichskörper (1) starr oder so weit elastisch ist, dass er Schwingungen aufnehmen und dämpfen kann, wobei die Materialdicke des Verbindungselements (12) vorzugsweise geringer ist als die Materialdicke des Kopfelements (11) und/oder des Fusselements (13).

14. Justierbare Aufhängevorrichtung nach einem der Ansprüche 1-13, **dadurch gekennzeichnet, dass** als Montageschraube (2) ein in die Decke (9) eingelassener Anker, insbesondere ein Segmentanker dient, der eine Gewindestange und wenigstens eine Schraubenmutter aufweist.

15. Justierbare Aufhängevorrichtung nach einem der Ansprüche 1-14, **dadurch gekennzeichnet, dass** der Abstandsstab (3) fest oder drehbar mit einer Rohrschelle, mit einer Kabelführungsvorrichtung oder mit einer abgehängten Decke verbunden ist.

## Claims

1. Adjustable suspension device with a flat compensation body (1), which extends bent several times and which comprises a head element (11) that is provided with a first opening (111) serving for receiving a mounting screw (2) and that is connected via a connecting element (12) with a foot element (13) that is formed, preferably bent, in parallel and in the opposite direction to the head element (11), which foot element (13) is provided with a second opening (131) serving for receiving an interspace bar (3), which can hold a holding device or a load, wherein the connecting element (12) is formed relative to the head element (11) and the foot element (12) in such a way, preferably bent, that the first and the second opening (111, 131) are arranged at least approximately coaxial to a first axis (x) of the compensation body (1), which extends perpendicularly to the head element (111) and the foot element (112), **characterised in that** the connecting element (12) is provided with a third opening (1221), into which the interspace bar (3) can be inserted when the suspension device is adjusted.

2. Adjustable suspension device according to claim 1, **characterised in that** the compensation body (1) consists of two parts or that the compensation body (1) is made in one piece from an at least approximately rectangular metal piece that is flat or provided with seams (125) or that the compensation body (1) is made of a plurality of at least approximately rectangular and identical metal pieces that are flat or provided with seams (125).

3. Adjustable suspension device according to claim 1 or 2, **characterised in that** the compensation body (1) is designed at least approximately symmetrical to a second axis (y), which extends through the connecting element (12) in parallel to the head element (11) and to the foot element (13).

4. Adjustable suspension device according to claim 1, 2 or 3, **characterised in that** the second opening (131) provided at the foot element (13) and the third opening (1221) provided at the connecting element (12) exhibit at least approximately the same cross-section than the projection to the first axis (x).

5. Adjustable suspension device according to one of the claims 1-4, **characterised in that** the interspace bar (3), which is provided with a thread, is connected to the foot element (13) by means of at least one screw nut (31) and/or is held in a thread, which is provided in the second opening (131) of the foot element (13).

6. Adjustable suspension device according to one of the claims 1-5, **characterised in that** the compensation body (1) exhibits two first bending zones (B1, B4), via which the connecting element (12) is connected to the head element (11) and the foot element (13), respectively.

7. Adjustable suspension device according to claim 6, **characterised in that** the connecting element (12) exhibits to additional bending zones (B2, B3), by which the connecting element (12) is partitioned into a head part element (121), a foot part element (123) and a central part element (122) lying therebetween, wherein the head part element (121) and the foot part element (123) exhibit identical or different lengths.

8. Adjustable suspension device according to claim 7, **characterised in that** the connecting element (12) comprises two central part elements (122', 122") that preferably engage into one another, that are arranged above or below one another and that enclose a first elastic element made of plastic or rubber therebetween, which comprises a fourth opening (51) that corresponds to the third openings provided in the two central part elements (122).

9. Adjustable suspension device according to claim 7 or 8, **characterised in that** the head element (11) and the head part element (121) and/or the foot element (13) and the foot part element (123) enclose a right angle and preferably have same length.

10. Adjustable suspension device according to claim 7, 8 or 9, **characterised in that** the head part element (121) is curved relative to the central part element (122, 122') by an angle in the range of 30° to 90°, preferably 45°, and/or that the foot part element (123) is curved relative to the central part element (122, 122'') preferably by an identical angle in the range of 30° to 90°, preferably 45°.

11. Adjustable suspension device according to one of the claims 1-10, **characterised in that** the length and/or the width of the preferably rectangular or quadratically formed head element (11) and/or the preferably rectangular or quadratically formed foot element (13) are larger by a factor n than the diameter of the first or the second opening (111; 131), respectively, wherein the factor n is in the range from 1,5 to 4.

12. Adjustable suspension device according to one of the claims 1-11, **characterised in that** the head element (11) and/or the foot element (13) are provided with at least one second elastic element (5) that is made from plastic or rubber, which serves for damping and adsorption of mechanical oscillations.

13. Adjustable suspension device according to one of the claims 1-12, **characterised in that** the compensation body (1) is rigid or elastic in such a way, that it can damp and absorb oscillations, wherein the thickness of the material of the connecting element (12) is preferably smaller than the thickness of the material of the head element (11) and/or the foot element (13).

14. Adjustable suspension device according to one of the claims 1-13, **characterised in that** an anchor, particularly an segment anchor, inserted into the ceiling (9) serves as mounting screw (2), which comprises a threaded shaft and at least one screw nut.

15. Adjustable suspension device according to one of the claims 1-14, **characterised in that** the interspace bar (3) is connected firmly or pivotally with a pipe clamp, a cable guiding device or with a suspended ceiling.

## Revendications

1. Dispositif de suspension ajustable comprenant un corps de compensation (1) plat s'étendant plusieurs fois courbé, qui présente un élément de tête (11) qui est muni d'une première ouverture (111) servant au logement d'une vis de montage (2) et qui est relié par un élément de connexion (12) à un élément de pied (13) de préférence courbé moulé parallèlement à l'élément de tête (11) et dans la direction opposée, lequel présente une seconde ouverture (131) qui sert au logement d'une barre d'espacement (3) qui peut maintenir un dispositif porteur ou une charge, l'élément de connexion (12) étant formé de préférence courbé par rapport à l'élément de tête (11) et l'élément de pied (12) de sorte que la première et la seconde ouverture (111, 131) sont disposées au moins approximativement coaxialement à un premier axe (x) du corps de compensation (1), axe qui s'étend perpendiculairement à l'élément de tête (111) et à l'élément de pied (112), **caractérisé en ce qu'**une troisième ouverture (1221) est prévue dans l'élément de liaison (12) dans laquelle la barre d'espacement (3) peut être introduite au moment de l'ajustement du dispositif de suspension.

2. Dispositif de suspension ajustable selon la revendication 1, **caractérisé en ce que** le corps de compensation (1) est fabriqué à partir de deux pièces ou **en ce que** le corps de compensation (1) est fabriqué d'une seule pièce à partir d'une pièce métallique plate ou munie de moulures (125) et au moins approximativement rectangulaire ou de plusieurs pièces métalliques identiques, au moins approximativement rectangulaires, plates ou munies de moulures (125).

3. Dispositif de suspension ajustable selon la revendication 1, **caractérisé en ce que** le corps de compensation (1) est configuré au moins approximativement symétriquement à un second axe (y) qui traverse l'élément de connexion (12) en parallèle à l'élément de tête (11) et à l'élément de pied (13).

4. Dispositif de suspension ajustable selon la revendication 1, 2 ou 3 **caractérisé en ce que** la seconde ouverture (131) prévue sur l'élément de pied (13) et la troisième ouverture (1221) prévue sur l'élément de connexion (12) présentent en projection au premier axe (x) au moins approximativement la même section transversale.

5. Dispositif de suspension ajustable selon l'une des revendications 1 à 4, **caractérisé en ce que** la barre d'espacement (3) munie d'un filet est reliée au moyen d'au moins un écrou (31) à l'élément de pied (13) et/ou est maintenue dans un filet qui est prévu dans la seconde ouverture (131) prévue sur l'élément de pied (13).

6. Dispositif de suspension ajustable selon l'une des revendications 1 à 5, **caractérisé en ce que** le corps de compensation (1) présente deux premières zones de flexion (B1, B4) par lesquels l'élément de connexion (12) est relié à l'élément de tête (11) respectivement à l'élément de pied (13).

7. Dispositif de suspension ajustable selon la revendication 6, **caractérisé en ce que** l'élément de connexion (12) présente au moins deux zones de flexion supplémentaires (B2, B3) qui partagent l'élément de connexion (12) en un élément de tête (121), un élément de pied (123) et un élément médian (122), l'élément de tête (121) et l'élément de pied (123) présentant des longueurs identiques ou différentes.

8. Dispositif de suspension ajustable selon la revendication 7, **caractérisé en ce que** l'élément de connexion (12) présente deux éléments de partie médiane (122'; 122") s'engageant de préférence l'un dans l'autre, qui sont disposés l'un sur l'autre ou en dessous de l'autre et enferment un premier élément élastique en matière plastique ou caoutchouc intercalé qui présente une quatrième ouverture (51) qui correspond aux troisièmes ouvertures dans les deux éléments de parties médianes (122).

9. Dispositif de suspension ajustable selon la revendication 7 ou 8, **caractérisé en ce que** l'élément de tête (11) et l'élément de partie de tête (121) et/ou l'élément de pied (13) et l'élément de partie de pied (123) forment un angle droit et de préférence sont de même longueur.

10. Dispositif de suspension ajustable selon la revendication 7, 8 ou 9, **caractérisé en ce que** l'élément de partie de tête (121) est coudé par rapport à l'élément de partie médiane (122, 122') d'un angle compris entre 30° et 90° de préférence 45° et/ou l'élément de partie de pied (123) est coudé par rapport à l'élément de partie médiane (122, 122'') d'un angle de préférence identique compris entre 30° et 90°, de préférence 45°.

11. Dispositif de suspension ajustable selon l'une des revendications 1 à 11, **caractérisé en ce que** la longueur et/ou la largeur de l'élément de tête (11) de forme carrée ou de préférence rectangulaire et/ou de l'élément de pied (13) de forme carrée ou de préférence rectangulaire sont d'un facteur n supérieur que le diamètre de la première respectivement la seconde ouverture (111; 131), le facteur n étant compris entre 1,5 et 4.

12. Dispositif de suspension ajustable selon l'une des revendications 1 à 11, **caractérisé en ce que** l'élément de tête (11) et/ou l'élément de pied (13) sont munis d'au moins un second élément élastique (5) en matière plastique ou caoutchouc qui sert à amortir les oscillations mécaniques.

13. Dispositif de suspension ajustable selon l'une des revendications 1 à 12, **caractérisé en ce que** le corps de compensation (1) est rigide ou élastique de manière à absorber et amortir des vibrations, l'épaisseur de matériau de l'élément de liaison (12) étant de préférence inférieure à l'épaisseur de matériau de l'élément de tête (11) et/ou de l'élément de pied (13).

14. Dispositif de suspension ajustable selon l'une des revendications 1 à 13, **caractérisé en ce qu'**un ancrage enrobé en tant que vis de montage (2) enrobé dans le plafond sert d'ancrage de segment qui présente une tige filetée et au moins un écrou.

15. Dispositif de suspension ajustable selon l'une des revendications 1 à 14, **caractérisé en ce que** la barre d'espacement (3) est reliée fixement ou rotative à un collier, à un dispositif de guidage de câble ou à un plafond suspendu.
